(19) Europäisches Patentamt / European Patent Office / Office européen des brevets

(11) **EP 2 382 704 B1**

(12) **EUROPÄISCHE PATENTSCHRIFT**

(45) Veröffentlichungstag und Bekanntmachung des Hinweises auf die Patenterteilung:
**06.03.2013 Patentblatt 2013/10**

(51) Int Cl.:
*H02P 7/28* (2006.01)     *H04J 9/00* (2006.01)
*H04L 5/02* (2006.01)     *H04L 25/49* (2006.01)

(21) Anmeldenummer: **09799286.1**

(22) Anmeldetag: **24.12.2009**

(86) Internationale Anmeldenummer:
**PCT/EP2009/009267**

(87) Internationale Veröffentlichungsnummer:
**WO 2010/083877 (29.07.2010 Gazette 2010/30)**

(54) **ELEKTROMOTOR, UND VORRICHTUNG ZUM ERZEUGEN EINES SIGNALS FÜR DIE STEUERUNG EINES SOLCHEN**

ELECTRIC MOTOR AND DEVICE FOR GENERATING A SIGNAL FOR CONTROLLING THE SAME

MOTEUR ÉLECTRIQUE ET DISPOSITIF DE GÉNÉRATION D'UN SIGNAL DESTINÉ À LA COMMANDE DUDIT MOTEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.01.2009 DE 102009006433**

(43) Veröffentlichungstag der Anmeldung:
**02.11.2011 Patentblatt 2011/44**

(73) Patentinhaber: **Ebm-Papst St. Georgen GmbH & CO. KG**
**78112 St. Georgen (DE)**

(72) Erfinder: **HIRT, Markus**
**78052 Villingen-Schwenningen (DE)**

(74) Vertreter: **Raible, Tobias**
**Raible & Raible**
**Patentanwälte**
**Schoderstrasse 10**
**D-70192 Stuttgart (DE)**

(56) Entgegenhaltungen:
**DE-A1- 4 029 556     JP-A- 9 009 681**
**US-A1- 2004 001 542**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft einen Elektromotor und eine Vorrichtung zum Erzeugen eines Signals für die Steuerung eines Elektromotors.

Es ist aus der EP 1 413 045 B1 bekannt, Elektromotoren unter Verwendung der Pulsweitenmodulation (PWM) zu steuern. Die Steuerimpulse werden dabei dem Motor in Form eines PWM-Signals mit einer konstanten Taktfrequenz zugeführt (Periodendauer T = konstant). Die Dauer t der Stromimpulse bzw. zugeordneter Impulspausen (T-t) ist variabel. Hierbei wird die Drehzahl des Motors durch das Tastverhältnis t/T des PWM-Signals bestimmt. Eine Veränderung des Tastverhältnisses t/T bewirkt dementsprechend eine Veränderung der Drehzahl.

Der Begriff der "Modulation" wird in Wikipedia wie folgt definiert:

"Modulation (Technik) aus Wikipedia, der freien Enzyklopädie.

Die Modulation (von Lateinisch modulatio = Takt, Rhythmus) beschreibt in der Nachrichtentechnik einen Vorgang, bei dem ein zu übertragendes Nutzsignal (beispielsweise Musik, Sprache, Daten) ein sogenanntes Trägersignal verändert (moduliert). Dadurch wird die Übertragung des niederfrequenten Nutzsignals über das höherfrequente Trägersignal ermöglicht. Dabei vergrößert das Nutzsignal immer die Frequenzbandbreite des Trägersignals. Die Nachricht wird empfangsseitig durch einen Demodulator wieder zurückgewonnen.

Das Trägersignal selbst ist bezüglich der übertragenen Nachricht ohne Bedeutung, es ist nur zur Anpassung an die physikalischen Eigenschaften des Übertragungskanals notwendig und kann (bei bestimmten Modulationsarten) unterdrückt werden. Allerdings muss es bestimmte Bedingungen erfüllen, vor allem eine höhere Frequenz aufweisen als die höchste in der Nachricht vorkommende Frequenz."

Während eine Drehzahlsteuerung bei einem Elektromotor mit einem geeigneten PWM-Signal ausführbar ist, müssen Daten, die ebenfalls im Betrieb des Motors zu diesem übertragen werden müssen, z.B. eine gewünschte Drehrichtung, über eine Zusatzleitung zum Motor übertragen werden.

In der DE 4 029 556 A1 wird die Übertragung von zwei Signalen durch eine Kombination von Pulsweitenmodulation und Amplitudenmodulation beschrieben.

Aufgabe der vorliegenden Erfindung ist es, einen neuen Elektromotor und eine neue Vorrichtung zum Erzeugen eines Signals für die Steuerung eines solchen bereit zu stellen.

Diese Aufgabe wird durch eine Vorrichtung zum Erzeugen eines Signals für die Steuerung eines Elektromotors nach Anspruch 1, sowie ein entsprechendes Verfahren nach Anspruch 8, einen Elektromotor nach Anspruch 6, und eine Vorrichtung nach Anspruch 13 zur Auswertung eines Ansteuersignals gelöst. Bevorzugte Weiterbildungen sind Gegenstand der Unteransprüche.

Hierbei wird einem PWM-Signal ein Datensignal aufmoduliert, so dass eine zusätzliche Leitung zur Übertragung des Datensignals nicht erforderlich ist.

Weitere Einzelheiten und vorteilhafte Weiterbildungen der Erfindung ergeben sich aus den im folgenden beschriebenen und in den Zeichnungen dargestellten Ausführungsbeispielen. Es zeigt:

Fig. 1      ein Blockdiagramm einer Anordnung mit einer Steuervorrichtung 120 und einem elektrischen Verbraucher 110,

Fig. 2      ein Blockdiagramm einer Ausführungsform der Steuervorrichtung 120 von Fig. 1,

Fig. 3      ein Blockdiagramm einer Ausführungsform des Signalgenerators 126 von Fig. 2,

Fig. 4      ein Blockdiagramm einer Ausführungsform des elektrischen Verbrauchers 110 von Fig. 1,

Fig. 5      ein Blockdiagramm einer Anordnung mit einer Steuervorrichtung 120 und mehreren elektrischen Verbrauchern, nämlich zwei Motoren 530 und 540, und zwei Heizkörpern 550 und 560,

Fig. 6      ein Flussdiagramm, welches ein Verfahren zur Erzeugung eines Steuersignals gemäß einer Ausführungsform zeigt,

Fig. 7      ein Diagramm, welches eine Sequenz eines PWM-Signals zur Leistungssteuerung gemäß einer Ausführungsform zeigt,

Fig. 8      ein Diagramm, welches eine erste, auf der Basis des PWM-Signals von Fig. 7 erzeugte Steuersequenz zeigt,

Fig. 9      ein Diagramm, welches eine zweite, auf der Basis der Sequenz des PWM-Signals von Fig. 7 erzeugte Steuersequenz zeigt,

Fig. 10   ein Diagramm, welches ein erstes, auf der Basis der Steuersequenz von Fig. 8 erzeugtes Steuersignal zeigt,

Fig. 11   ein Diagramm, welches ein zweites, auf der Basis der Steuersequenz von Fig. 8 erzeugtes Steuersignal zeigt,

Fig. 12   ein Diagramm, welches ein drittes, auf der Basis der Steuersequenz von Fig. 8 erzeugtes Steuersignal zeigt,

Fig. 13   ein Flussdiagramm, welches ein Verfahren zur Auswertung eines solchen Steuersignals zeigt,

Fig. 14   ein Diagramm, welches eine Steuersequenz zeigt, die dazu dient, bei der Anordnung nach Fig. 5 den gewünschten Motor von den beiden Motoren 530 (M1) oder 540 (M2) zu adressieren, ihm ein Drehrichtungssignal DIR zu übermitteln, und die Leistung (oder Drehzahl) dieses Motors durch ein gleichzeitig übermitteltes Tastverhältnis PWM zu steuern,

Fig. 15   ein Diagramm, welches eine Steuersequenz für die Anordnung nach Fig. 5 zeigt, bei der nach einem Startsignal zuerst der Motor M1 adressiert wird und ein PWM-Signal erhält, und anschließend zum Motor 1 das Drehrichtungssignal Rechtslauf (R) zusammen mit dem PWM-Signal übertragen wird; darauf folgt erneut das Startsignal, und danach eine analoge Signalfolge für den Motor M2,

Fig. 16   ein Flussdiagramm, welches den Ablauf bei der Erzeugung des Steuersignals der Fig. 14b zeigt, und

Fig. 17   ein Flussdiagramm, welches den Ablauf beim Auslesen von Daten aus dem modulierten PWM-Signal der Fig. 14b zeigt.

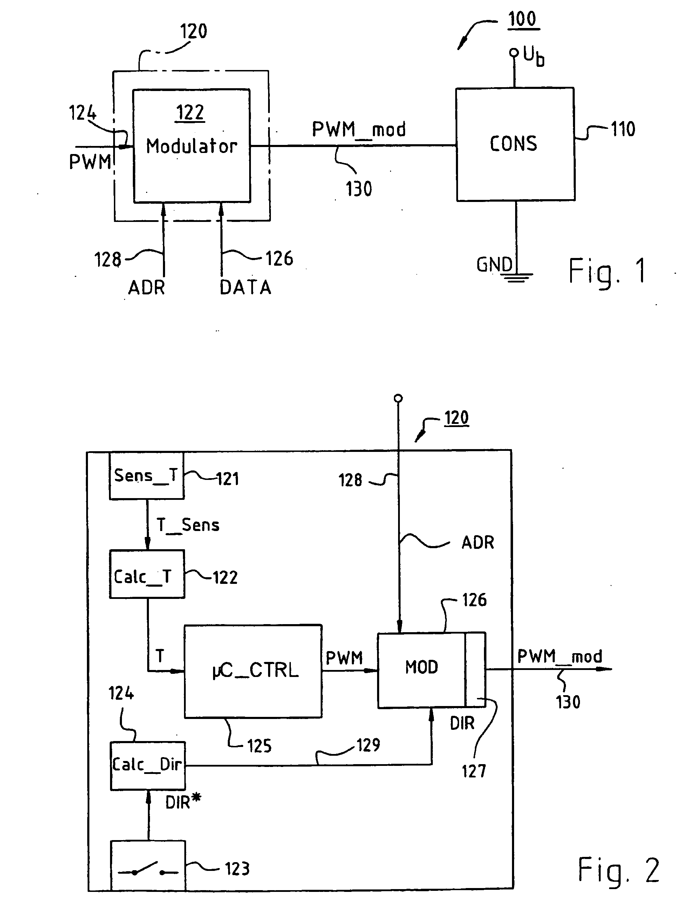

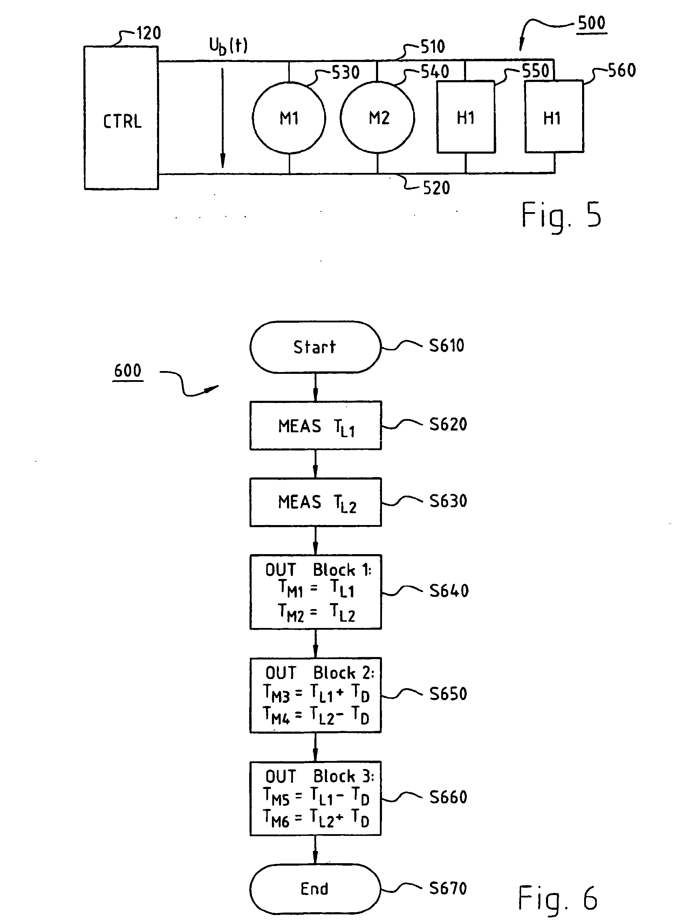

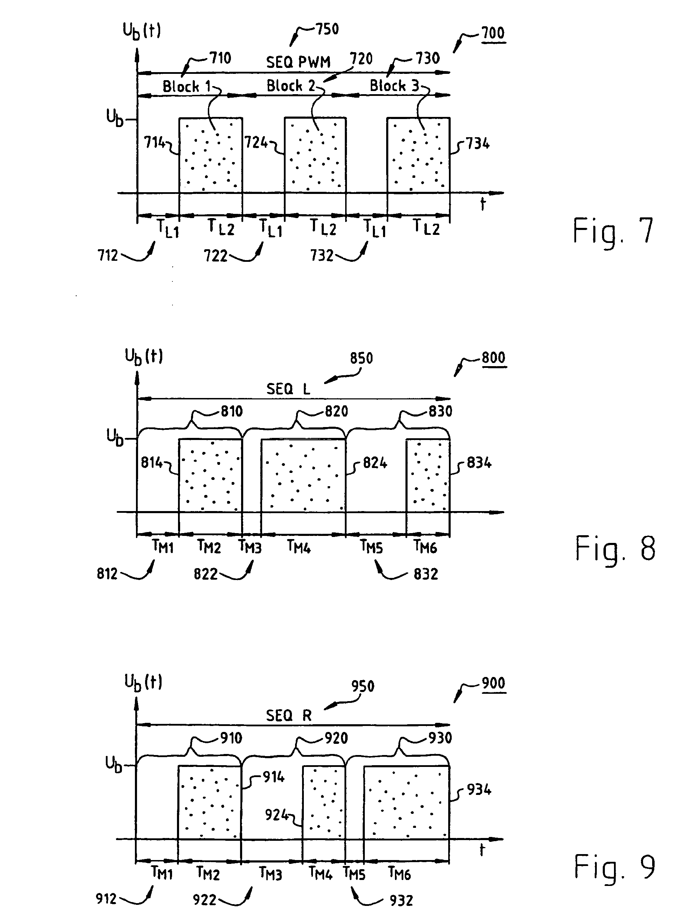

**Fig. 1** zeigt eine Anordnung 100 mit einem elektrischen Verbraucher CONS 110 und eine Steuervorrichtung 120. Sie enthält einen Modulator 122, dessen einem Eingang 124 im Betrieb ein PWM-Signal zugeführt wird, wie es als Beispiel in Fig. 7 dargestellt ist. Ferner hat der Modulator 122 einen Eingang 126, dem Daten zugeführt werden können, z.B. ein Signal für die gewünschte Drehrichtung eines Motors, und ggf. weitere Eingänge, z.B. einen Eingang 128 für die Adressierung eines Geräts, z.B. eines Motors M1 oder M2, wie in Fig. 5 dargestellt.

Mit den Daten am Eingang 126 oder am Eingang 128 kann das PWM-Signal (vom Eingang 124) moduliert werden, wie in Fig. 8 und 9 dargestellt, so dass man z.B. am Ausgang 130 des Modulators 122 ein moduliertes PWM-Signal PWM_mod erhält, mit dem die Drehrichtung und die Leistung des Motors M1 der Fig. 5 über eine einzige Leitung gesteuert werden kann, oder alternativ die Adressierung eines Motors M1 bzw. M2 in Fig. 5, um Daten zu diesem zu übertragen.

Das Steuersignal PWM_mod bestimmt gemäß einer Ausführungsform eine dem Verbraucher 110 aus einer Spannungsquelle Ub zuzuführende elektrische Leistung und enthält Daten, die zum Betrieb des Verbrauchers 110 erforderlich sind, wie das nachfolgend bei Fig. 8 und 9 beschrieben wird. Diese Daten beschreiben z.B. einen Betriebsparameter des Verbrauchers 110, der einen Betriebsmodus dieses Verbrauchers bestimmt. Beispielsweise wird der Verbraucher in einem ersten Betriebsmodus betrieben, wenn die Daten des Signals PWM_mod einen ersten Betriebsparameter vorgeben, und in einem zweiten Betriebsmodus, wenn diese Daten einen zweiten Betriebsparameter vorgeben.

Zur Verdeutlichung der Erfindung werden nachfolgend bevorzugte Ausführungsbeispiele beschrieben, in denen der Verbraucher 110 ein Elektromotor ist, der im Rechtslauf oder im Linkslauf betreibbar ist. Dementsprechend bestimmen Betriebsdaten oder Betriebsparameter eine zugeordnete Drehrichtung, wobei z.B. ein erster Betriebsparameter Rechtslauf und ein zweiter Betriebsparameter Linkslauf bedeutet. Der Elektromotor 110 kann zum Antrieb einer Pumpe dienen, die sowohl im Vorwärts- als auch im Rückwärtslauf betreibbar ist, wobei in beiden Drehrichtungen die Leistung durch das Signal PWM_mod individuell veränderbar ist.

**Fig. 2** zeigt beispielhaft eine Realisierung der Steuervorrichtung 120 mit einem Signalgenerator 126 zur Erzeugung eines modulierten Steuersignals PWM_mod. Der Generator 126 hat eine Sendeeinheit 127. Ihm wird einerseits von einer Steuereinheit 125 ein Signal PWM zugeführt, und andererseits von einer Einrichtung 124 über eine Leitung 129 ein Drehrichtungssignal DIR, welches in Fig. 1 die Drehrichtung eines Motors 110 vorgibt, welcher den Verbraucher 110 bilden kann.

Die Einrichtung 124 ist hier mit einer Drehrichtungsvorgabe 123 verbunden, z.B. einem Schaltkontakt, bei dessen Betätigung ein Signal DIR* erzeugt wird. Die Einrichtung 124 erzeugt bei Empfang eines Signals DIR* ein entsprechendes Drehrichtungssignal DIR, das dem Modulator 126 zugeführt wird.

Das Signal PWM kann aus jeder beliebigen Quelle stammen. Hier ist die Steuereinheit 125 mit einer Einrichtung 122 verbunden, der von einem Temperatursensor 121 ein Temperatursignal T_Sens zugeführt wird. Der Sensor 121 kann z.B. an einem zu kühlenden Objekt angeordnet sein, um dessen Temperatur zu erfassen. Die Einrichtung 122 bestimmt aus T_Sens ein Temperatursignal und gibt ein entsprechendes Signal T an die Steuereinheit 125.

Letztere wird beispielhaft mit einem Mikrocontroller realisiert, der programmgesteuert das pulsweitenmodulierte Signal PWM erzeugt. Dieses hat ein vom Temperatursignal T abhängiges Tastverhältnis, welches eine dem Verbraucher 110 (Fig. 1) zuzuführende elektrische Leistung steuert. Dementsprechend kann dem Verbraucher 110 bei einer hohen aktuellen Temperatur T eine große elektrische Leistung zugeführt werden, und bei einer niedrigen Temperatur eine niedrige Leistung, z.B., um bei einem Motor 110 die Drehzahl entsprechend zu beeinflussen. Der Motor 110 kann auch ausgeschaltet werden, wenn die aktuelle Temperatur T einen vorgegebenen Schwellenwert unterschreitet. Ein geeignetes Verfahren zur Erzeugung des Signals PWM ist aus der EP 1 413 045 B1 bekannt, auf deren ganzen Inhalt Bezug genommen wird, um Längen zu vermeiden.

Bei einer Ausführungsform ist der Signalgenerator 126 dazu ausgebildet, das modulierte Steuersignal PWM_mod für die Ansteuerung des Verbrauchers 110 zu erzeugen. Hierzu moduliert der Signalgenerator 126 das Datensignal DIR derart auf das Signal PWM auf, dass dem modulierten Steuersignal PWM_mod das Tastverhältnis des Signals PWM entnommen werden kann. Somit gibt das modulierte Steuersignal PWM_mod die dem Verbraucher 110 zuzuführende elektrische Leistung über sein Tastverhältnis vor, während andere zum Betrieb des Verbrauchers 110 erforderliche Daten auf dieses Signal moduliert sind. Die Sendeeinheit 127 überträgt dann das modulierte Steuersignal PWM_mod über eine Steuerleitung 130 zum Verbraucher 110, wie in Fig. 1 dargestellt.

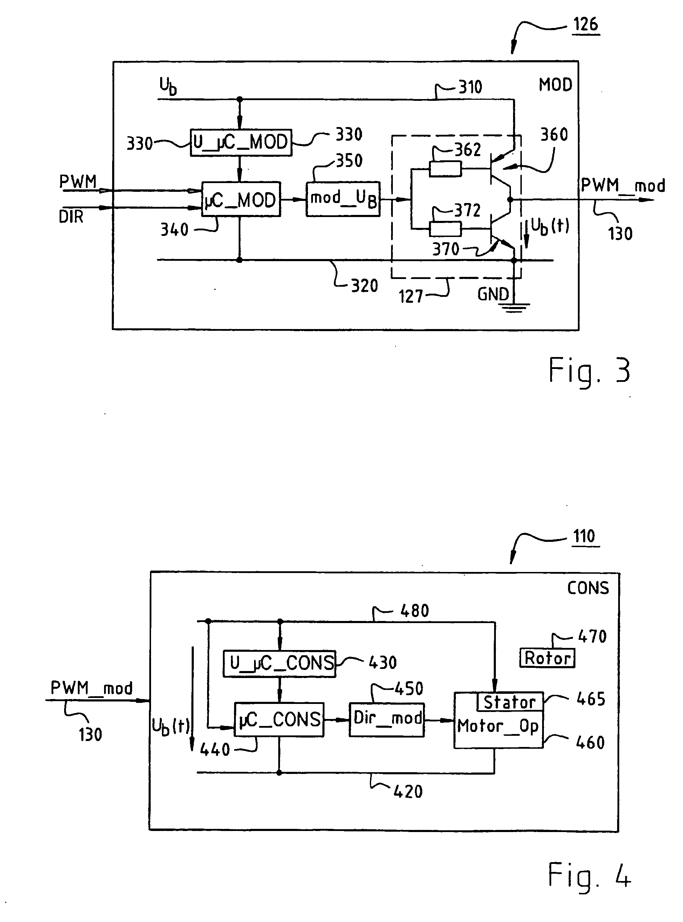

Fig. 3 zeigt beispielhaft die Realisierung des mit der Sendeeinheit 127 versehenen Signalgenerators 126 von Fig. 2, dem das pulsweitenmodulierte Signal PWM und das Datensignal DIR zugeführt werden. Der Signalgenerator 126 hat eine Signalleitung 310 für eine Spannung Ub, und eine Masseleitung 320. Die Leitung 310 ist mit einem Spannungsregler 330 verbunden, welcher ausgangsseitig mit einem an die Masseleitung 320 angeschlossenen Steuerelement 340, z.B. einem Mikrocontroller, verbunden ist. Der Spannungsregler 330 ist dazu ausgebildet, das Steuerelement 340 mit einer im Wesentlichen konstanten Betriebsspannung zu versorgen. Das Steuerelement 340 ist ausgangsseitig mit einer Ansteuerung 350 für die Sendeeinheit 127 verbunden und dient zur Verarbeitung des pulsweitenmodulierten Signals PWM und des Datensignals DIR.

Die Sendeeinheit 127 hat zwei Widerstände 362, 372, welche einerseits mit der Ansteuerung 350 und andererseits mit einem zugeordneten Halbleiterschalter 360 bzw. 370 verbunden sind. Der Halbleiterschalter 360 ist ein PNP-Transistor, dessen Basis mit dem Widerstand 362 verbunden ist. Sein Emitter ist mit der Leitung 310 und sein Kollektor mit der Übertragungsleitung 130 verbunden. Der Halbleiterschalter 370 ist ein NPN-Transistor, dessen Basis mit dem Widerstand 372 verbunden ist. Sein Emitter ist mit der Masseleitung 320 und sein Kollektor mit der Übertragungsleitung 130 verbunden.

Im Betrieb des Signalgenerators 126 bestimmt das Steuerelement 340 das Tastverhältnis des pulsweitenmodulierten Signals PWM und die Daten bzw. den Betriebsparameter, welcher von dem Datensignal DIR vorgegeben wird. Dann steuert das Steuerelement 340 die Halbleiterschalter 360, 370 über die Ansteuerung 350 und die Widerstände 362, 372 derart an, dass diese aus der Versorgungsspannung Ub eine Steuerspannung Ub(t) erzeugen, die das Steuersignal PWM_mod bildet, welches auf der Leitung 130 zum Motor 110 übertragen wird. Wie bereits oben erwähnt, hat dieses Steuersignal PWM_mod das Tastverhältnis des pulsweitenmodulierten Signals PWM und trägt die Daten des Datensignals DIR.

Ein beispielhaftes Verfahren zur Erzeugung des Steuersignals PWM_mod wird unten bei Fig. 6 zur Verdeutlichung der Funktionsweise des Steuerelements 340 und der Ansteuerung 350 beschrieben.

Fig. 4 zeigt eine exemplarische Realisierung des Elektromotors 110 von Fig. 1, welcher einen beispielhaften elektrischen Verbraucher darstellt und eine Versorgungsleitung 480 sowie eine Masseleitung 420 aufweist. Dem Elektromotor 110 wird über die Leitung 130 von Fig. 3 das Steuersignal PWM_mod zugeführt, welches an der Leitung 480 als Spannung Ub(t) anliegt. Diese wird über die Leitung 480 einem Energiepuffer 430 und einer mit der Masseleitung 420 verbundenen Auswerteeinheit 440 zugeführt, welche eingangsseitig ebenfalls mit dem Energiepuffer 430 verbunden ist. Der Energiepuffer 430 und die Auswerteeinheit 440 bilden somit eine Empfangseinheit zum Empfangen des Steuersignals PWM_mod von der Leitung 130.

Die Auswerteeinheit 440 ist ausgangsseitig mit einem Signalgenerator 450 verbunden, der seinerseits ausgangsseitig mit Motorkomponenten 460 des Motors 110 verbunden ist. Diese umfassen beispielsweise einen Stator 465 mit mindestens einer Statorwicklung und einem zugeordneten Endstufentransistor. Dem Stator 465, dessen mindestens eine Statorwicklung mit der Leitung 480 und der Masseleitung 420 verbunden ist, ist ein Rotor 470 zugeordnet.

Im Betrieb des Elektromotors 110 wird das durch das Tastverhältnis des Steuersignals PWM_mod vorgegebene, dem Motor zuzuführende Signal über die auf der Leitung 480 geführte Steuerspannung Ub(t) der mindestens einen Statorwicklung des Stators 465 zugeführt, während die Auswerteeinheit 440 das Steuersignal PWM_mod auswertet, um die zum Betrieb des Motors vorgesehenen Daten bzw. den entsprechenden Betriebsparameter auf der Basis des Steuersignals PWM_mod zu bestimmen. In Abhängigkeit von dem bestimmten Betriebsparameter wird der Signalgenerator 450 angesteuert, um seinerseits ein Ansteuersignal für die zugeordneten Endstufentransistoren des Stators 465 zu erzeugen, um den Motor in einem dem bestimmten Betriebsparameter entsprechenden Betriebsmodus zu betreiben. Z.B. kann das Ansteuersignal dazu ausgebildet sein, entsprechende Endstufentransistoren des Stators 465 derart zu kommutieren, dass der Motor im Rechtslauf betrieben wird, wenn der Betriebsparameter den Rechtslauf vorgibt.

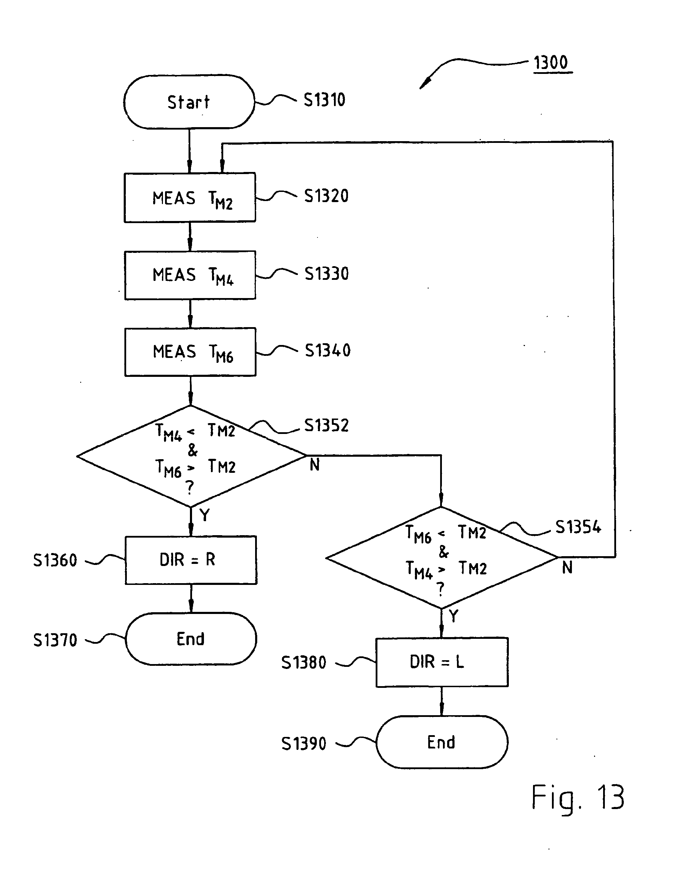

Ein beispielhaftes Verfahren zur Auswertung des Steuersignals PWM_mod wird unten bei Fig. 13 zur Verdeutlichung der Funktionsweise der Auswerteeinheit 440 und des Signalgenerators 450 beschrieben.

**Fig. 5** zeigt eine Anordnung 500, bei der die von der Steuervorrichtung 120 erzeugte Steuerspannung Ub(t) von Fig. 3, die das Steuersignal PWM_mod von Fig. 1 bildet, über eine Übertragungsleitung 510 einer Vielzahl von beispielhaften, an eine Masseleitung 520 angeschlossenen elektrischen Verbrauchern 530, 540, 550, 560 zugeführt wird. Diese können ähnlich wie der Elektromotor 110 von Fig. 4 ausgeführt sein, um eine Auswertung des Steuersignals PWM_mod vorzunehmen und in Abhängigkeit eines hierbei bestimmten Betriebsparameters betrieben zu werden. Z.B. kann der Verbraucher 530 von dem Elektromotor 110 von Fig. 4 realisiert werden, während der Verbraucher 540 nur in eine Drehrichtung drehbar ist und somit ohne die in Fig. 4 beschriebenen Komponenten zur Auswertung des Signals PWM_mod realisiert werden kann. Alternativ hierzu können beide Verbraucher 530, 540 wie der Elektromotor 110 von Fig. 4 realisiert werden, während die Verbraucher 550, 560 beispielhaft Heizelemente darstellen, die ohne die in Fig. 4 beschriebenen Komponenten zur Auswertung des Signals PWM_mod realisiert werden.

**Fig. 6** zeigt ein beispielhaftes Verfahren 600 zur Erzeugung des Steuersignals PWM_mod von Fig. 1 bis 4, welches z.B. von dem Signalgenerator 126 von Fig. 3 ausgeführt wird. Dieses beginnt in Schritt S610 mit dem Empfang bzw. Einlesen des pulsweitenmodulierten Signals PWM von Fig. 2.

**Fig. 7** zeigt ein beispielhaftes Diagramm 700 eines pulsweitenmodulierten Signals PWM, welches von der Versorgungsspannung $U_b$ von Fig. 3 gebildet wird und aufeinander folgende Signalelemente hat, wobei in Fig. 7 zur Vereinfachung nur drei Signalelemente 710, 720, 730 (Block 1, Block 2, Block 3) gezeigt sind. Diese bilden gemäß einer Ausführungsform eine Signalsequenz 750 (SEQ PWM). Die Signalelemente 710, 720, 730 haben jeweils eine Impulspause 712, 722 bzw. 732 mit einer vorgegebenen, konstanten Pausendauer $T_{L1}$ und einen darauf folgenden Impuls 714, 724 bzw. 734 mit einer vorgegebenen, konstanten Impulsdauer $T_{L2}$. Die Pausendauer $T_{L1}$ und die Impulsdauer $T_{L2}$ sind jeweils in Abhängigkeit von der dem Elektromotor 110 zuzuführenden Leistung vorgegeben, wobei das von der Pausendauer $T_{L1}$ und der Impulsdauer $T_{L2}$ gebildete Tastverhältnis $T_{L2}/(T_{L1} + T_{L2})$ die zuzuführende Leistung bestimmt, d.h. das Tastverhältnis ist umso größer, je größer die einzustellende Leistung ist.

Bezug nehmend erneut auf **Fig. 6**, wird in Schritt 5620 die Pausendauer $T_{L1}$ der Signalelemente 710, 720, 730 von Fig. 7 bestimmt. Dann wird im Schritt S630 deren Impulsdauer $T_{L2}$ bestimmt. Anschließend wird in Schritten S640 bis S660 das Datensignal DIR von Fig. 2 auf das Signal PWM moduliert, wobei gemäß einer Ausführungsform zumindest die Pausendauer $T_{L1}$ und die Impulsdauer $T_{L2}$ von mindestens zwei aufeinander folgenden Signalelementen des Signals PWM unter Beibehaltung von dessen Tastverhältnis in Abhängigkeit von den Daten des Datensignals DIR modifiziert werden. Im Folgenden wird beispielhaft ein Aufmodulieren eines Datensignals DIR beschrieben, welches Daten aufweist, die als Betriebsparameter einen Rechtslauf (DIR = R) des Elektromotors 110 von Fig. 1 und 4 vorgeben.

In Schritt S640 wird ein erstes Signalelement des Steuersignals PWM_mod erzeugt, welches beispielhaft eine Pausendauer $T_{M1}$ und eine Impulsdauer $T_{M2}$ aufweist, die der Pausen- und Impulsdauer des Signalelements 710 von Fig. 7 entsprechen, d.h. $T_{M1} = T_{L1}$ und $T_{M2} = T_{L2}$. In Schritt S650 wird ein zweites, auf das erste Signalelement folgendes Signalelement erzeugt. Dieses hat eine Pausendauer $T_{M3}$, die der um eine vorgegebene Zeitdauer $T_D$ verlängerten Pausendauer $T_{L1}$ des Signalelements 720 von Fig. 7 entspricht, d.h.

$$T_{M3} = T_{L1} + T_D.$$

Seine Impulsdauer $T_{M4}$ entspricht der um die Zeitdauer $T_D$ verkürzten Impulsdauer $T_{L2}$ des Signalelements 720 von Fig. 7, d.h. $T_{M4} = T_{L2} - T_D$.

In Schritt S660 wird ein drittes, auf das zweite Signalelement folgendes Signalelement erzeugt. Dieses hat eine Pausendauer $T_{M5}$, welche der um die Zeitdauer $T_D$ verkürzten Pausendauer $T_{L1}$ des Signalelements 730 von Fig. 7 entspricht, d.h. $T_{M5} = T_{L1} - T_D$. Seine Impulsdauer $T_{M6}$ entspricht der um die Zeitdauer $T_D$ verlängerten Impulsdauer $T_{L2}$ des Signalelements 730 von Fig. 7, d.h. $T_{M6} = T_{L2} + T_D$. Ein derart erzeugtes moduliertes Steuersignal PWM_mod ist beispielhaft in Fig. 9 gezeigt.

Das Verfahren 600 endet dann in Schritt S670 mit der Übertragung des Steuersignals PWM_mod zum Elektromotor 110, wie oben bei Fig. 3 und 4 beschrieben.

Wie bereits erwähnt, steuert das gemäß dem Verfahren 600 von Fig. 6 erzeugte Steuersignal PWM_mod den Rechtslauf des Elektromotors 110 von Fig. 1 und 4. Zur Erzeugung eines Steuersignals PWM_mod für den Linkslauf des Motors 110 kann das in Schritt S650 erzeugte, zweite Signalelement mit einer Pausendauer $T_{M3}$ ausgebildet werden, die der um eine vorgegebene Zeitdauer $T_D$ verkürzten Pausendauer $T_{L1}$ des Signalelements 720 von Fig. 7 entspricht, d.h. $T_{M3} = T_{L1} - T_D$, während seine Impulsdauer $T_{M4}$ der um die Zeitdauer $T_D$ verlängerten Impulsdauer $T_{L2}$ des Signalelements 720 von Fig. 7, d.h.

$$T_{M4} = T_{L2} + T_D.$$

Darüber hinaus kann das in Schritt 5660 erzeugte, dritte Signalelement eine Pausendauer $T_{M5}$ haben, die der um die Zeitdauer $T_D$ verlängerten Pausendauer $T_{L1}$ des Signalelements 730 von Fig. 7 entspricht, d.h. $T_{M5} = T_{L1} + T_D$, während seine Impulsdauer $T_{M6}$ der um die Zeitdauer $T_D$ verkürzten Impulsdauer $T_{L2}$ des Signalelements 730 von Fig. 7, d.h.

$$T_{M6} = T_{L2} - T_D$$

Ein derart erzeugtes Steuersignal PWM_mod ist in Fig. 8 dargestellt.

Es wird jedoch darauf hingewiesen, dass die Verwendung des Verfahrens 600 zur Erzeugung der zweiten und dritten Signalelemente für modulierte Steuersignale PWM_mod, welche zur Steuerung des Rechts- oder Linkslaufs des Elektromotors 110 von Fig 1 und 4 geeignet sind, nur beispielhaft beschrieben ist.

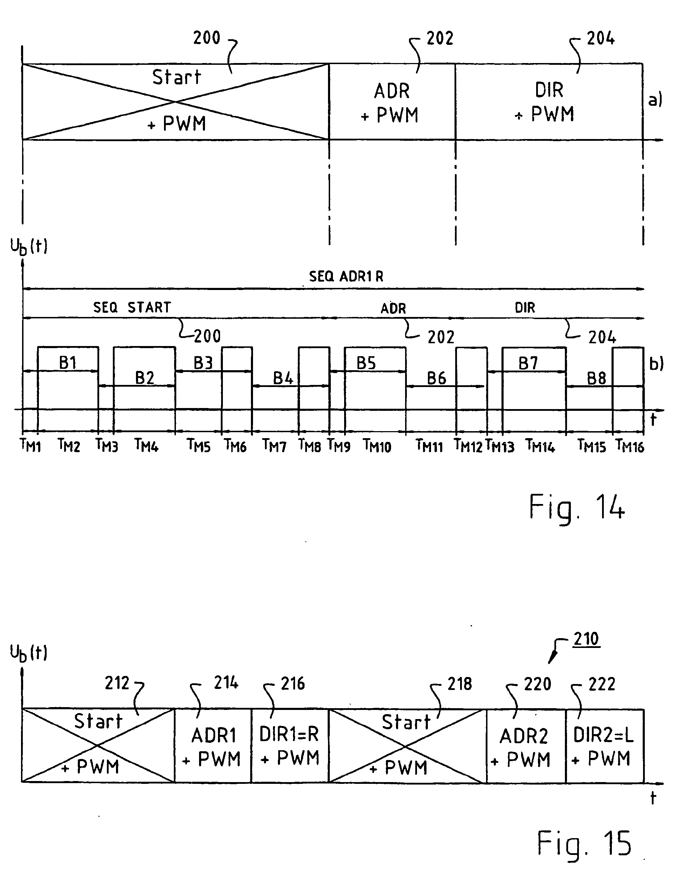

Nachfolgend wird bei den Fig. 14 bis 17 beschrieben, wie eine separate Ansteuerung verschiedener Geräte möglich ist, z.B. der Motoren M1 und M2 der Fig. 5.

**Fig. 8** zeigt ein Diagramm 800 einer beispielhaften Signalsequenz 850 (SEQ L) eines Steuersignals PWM_mod, welche gemäß einer Ausführungsform den Betriebsparameter "Linkslauf" für den Motor 110 von Fig. 1 und 4 vorgibt und auf der Basis des pulsweitenmodulierten Signals PWM von Fig. 7 erzeugt wurde. Dementsprechend hat die Signalsequenz 850 drei aufeinander folgende Signalelemente 810, 820, 830 mit Impulspausen 812, 822, 832 und jeweils darauf folgenden Impulsen 814, 824, bzw. 834.

Das erste Signalelement 810, welches als Referenz-Signalelement dient, hat die Impulspause 812 mit einer Pausendauer $T_{M1}$ und den Impuls 814 mit einer Impulsdauer $T_{M2}$, die der Pausen- und Impulsdauer des Signalelements 710 von Fig. 7 entsprechen, d.h. $T_{M1} = T_{L1}$. und $T_{M2} = T_{L2}$.

Das zweite Signalelement 820 hat die Impulspause 822 mit einer Pausendauer $T_{M3}$ und den Impuls 824 mit einer Impulsdauer $T_{M4}$, wobei $T_{M3} = T_{L1} - T_D$ und $T_{M4} = T_{L2} + T_D$.

Das dritte Signalelement 830 hat die Impulspause 832 mit einer Pausendauer $T_{M5}$ und den Impuls 834 mit einer Impulsdauer $T_{M6}$, wobei $T_{M5} = T_{L1} + T_D$ und $T_{M6} = T_{L2} - T_D$.

Das Tastverhältnis der Signalsequenz 850 entspricht dem Tastverhältnis der Signalsequenz 750 von Fig. 7, d.h.

$$T_{L2}/ (T_{L1} + T_{L2}) = (T_{M2} + T_{M4} + T_{M6})/ (T_{M1} + T_{M2} + T_{M3} + T_{M4} + T_{M5} + T_{M6}).$$

Insoweit entspricht, wie oben beschrieben, das durch das Steuersignal PWM_mod dem Motor 110 zugeführte elektrische Signal demjenigen, das dem Motor 110 durch das pulsweitenmodulierte Signal PWM von Fig. 7 zugeführt würde.

**Fig. 9** zeigt ein Diagramm 900 einer beispielhaften Signalsequenz 950 (SEQ R) eines Steuersignals PWM_mod, welche gemäß einer Ausführungsform den Betriebsparameter "Rechtslauf" für den Motor 110 von Fig. 1 und 4 vorgibt und auf der Basis des pulsweitenmodulierten Signals PWM von Fig. 7 erzeugt wurde. Die Signalsequenz 950 hat drei aufeinander folgende Signalelemente 910, 920, 930 mit Impulspausen 912, 922, 932 und jeweils darauf folgenden Impulsen 914, 924, bzw. 934.

Das erste Signalelement 910, welches wiederum als Referenz-Signalelement dient, hat die Impulspause 912 mit einer Pausendauer $T_{M1}$ und den Impuls 914 mit einer Impulsdauer $T_{M2}$, die der Pausen- und Impulsdauer des Signalelements 710 von Fig. 7 entsprechen, d.h. $T_{M1} = T_{L1}$ und $T_{M2} = T_{L2}$. Das zweite Signalelement 920 hat die Impulspause 922 mit einer Pausendauer $T_{M3}$ und den Impuls 924 mit einer Impulsdauer $T_{M4}$, wobei $T_{M3} = T_{L1} + T_D$ und $T_{M4} = T_{L2} - T_D$.

Das dritte Signalelement 930 hat die Impulspause 932 mit einer Pausendauer $T_{M5}$ und den Impuls 934 mit einer Impulsdauer $T_{M6}$,

wobei $T_{M5} = T_{L1} - T_D$.

und $T_{M6} = T_{L2} + T_D$.

Das Tastverhältnis der Signalsequenz 950 entspricht dem Tastverhältnis der Signalsequenz 850 von Fig. 8 und der Signalsequenz 750 von Fig. 7.

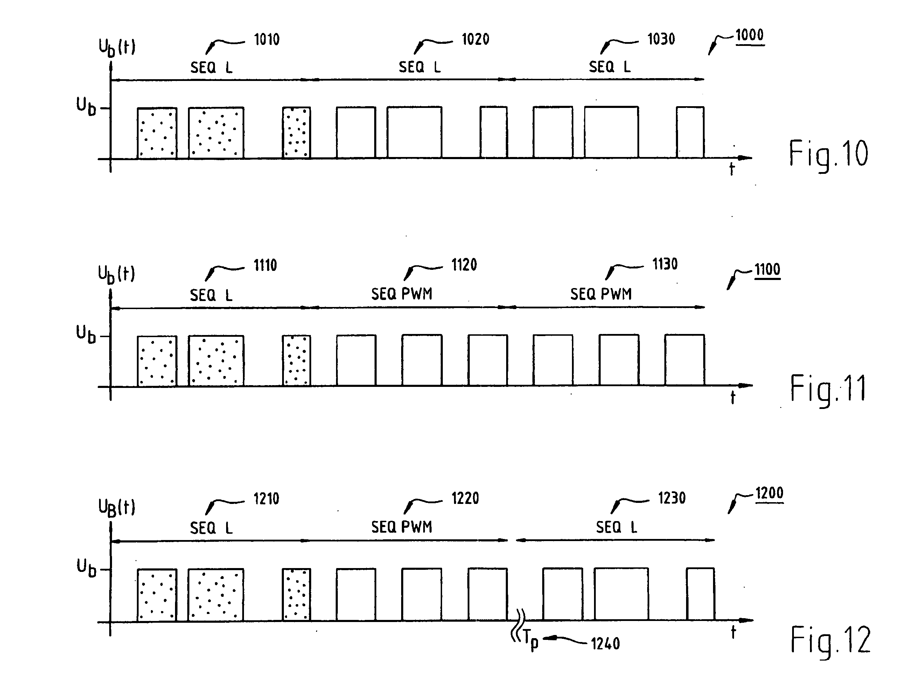

**Fig. 10** zeigt ein Diagramm 1000 einer ersten Ausführungsform eines Steuersignals PWM_mod, welches den Betriebsparameter "Linkslauf" für den Motor 110 von Fig. 1 und 4 vorgibt und auf der Basis des pulsweitenmodulierten Signals PWM von Fig. 7 erzeugt wurde. Dieses hat eine Vielzahl von aufeinander folgenden Signalsequenzen, wobei zur Vereinfachung der Darstellung nur drei Signalsequenzen 1010, 1020, 1030 abgebildet sind. Diese entsprechen alle der Linkslauf-Sequenz 850 von Fig. 8 bzw. einer den gewünschten Betriebsparameter festlegenden Signalsequenz, welche somit fortwährend bei der Erzeugung des Steuersignals PWM_mod erzeugt wird.

**Fig. 11** zeigt ein Diagramm 1100 einer zweiten Ausführungsform eines Linkslauf-Steuersignals PWM_mod mit drei beispielhaften Signalsequenzen 1110, 1120, 1130, wobei die Sequenz 1110 der Linkslauf-Sequenz 850 von Fig. 8 entspricht und die Sequenzen 1120, 1130 der PWM-Sequenz 750 von Fig. 7 entsprechen. Dementsprechend wird gemäß der zweiten Ausführungsform die Linkslauf-Sequenz 850 von Fig. 8 bzw. eine den gewünschten Betriebsparameter festlegende Signalsequenz nur einmalig zu Beginn der Ansteuerung des Motors 110 von Fig. 1 und 4 erzeugt.

**Fig. 12** zeigt ein Diagramm 1200 einer dritten Ausführungsform eines Linkslauf-Steuersignals PWM_mod mit drei beispielhaften Signalsequenzen 1210, 1220, 1230, wobei die Sequenzen 1210 und 1230 der Linkslauf-Sequenz 850 von Fig. 8 entsprechen und die Sequenz 1220 der PWM-Sequenz 750 von Fig. 7 entspricht. Die Sequenz 1230 ist beispielhaft um eine vorgegebene Zeitdauer 1240 ($T_P$) von der Sequenz 1210 beabstandet. Dementsprechend wird gemäß der dritten Ausführungsform die Linkslauf-Sequenz 850 von Fig. 8 bzw. eine den gewünschten Betriebsparameter festlegende Signalsequenz wiederholt jeweils nach Ablauf der vorgegebenen Zeitdauer 1240 ($T_P$) erzeugt.

**Fig. 13** zeigt ein beispielhaftes Verfahren 1300 zur Auswertung des Steuersignals PWM_mod von Fig. 8 bis 12, welches von der Auswerteeinheit 440 der Fig. 4 ausgeführt wird. Dieses beginnt in Schritt 51310 mit dem Empfang bzw. Einlesen des Steuersignals PWM_mod. Im Folgenden wird das Verfahren 1300 für eine Auswertung der Impulsdauern der Signalelemente des Steuersignals PWM_mod von Fig. 8 beschrieben. Es wird darauf hingewiesen, dass das Verfahren analog auf deren Pausendauern anwendbar ist.

In Schritt S1320 wird die Impulsdauer $T_{M2}$ des ersten Signalelements 810 gemessen. Dann wird in Schritt S1330 die Impulsdauer $T_{M4}$ des zweiten Signalelements 820 gemessen, und in Schritt 51340 wird die Impulsdauer $T_{M6}$ des dritten Signalelements 830 gemessen.

In Schritt 51352 wird bestimmt, ob die Impulsdauer $T_{M2}$ größer ist als die Impulsdauer $T_{M4}$ und kleiner als die Impulsdauer $T_{M6}$ ist. Dies ist wie oben bei Fig. 9 beschrieben, der Fall, falls das Steuersignal PWM_mod die Signalsequenz 950 von Fig. 9 enthält und somit den Betriebsparameter "Rechtslauf" (DIR = R) für den Motor 110 von Fig. 1 und 4 vorgibt, welcher in Schritt 51360 bestimmt wird. Das Verfahren 1300 endet in diesem Fall in Schritt S1370, in dem die Auswerteeinheit 440 von Fig. 4 den Signalgenerator 450 von Fig. 4 ansteuert, damit dieser seinerseits ein Ansteuersignal für die zugeordneten Endstufentransistoren des Stators 465 von Fig. 4 erzeugt, um den Motor 110 im Rechtslauf zu betreiben.

Im vorliegenden Ausführungsbeispiel des Steuersignals PWM_mod von Fig. 8 lautet jedoch in Schritt S1352 die Antwort "Nein", und es wird ausgehend von Schritt S1352 in Schritt S1354 bestimmt, ob die Impulsdauer $T_{M2}$ kleiner als die Impulsdauer $T_{M4}$ und größer als die Impulsdauer $T_{M6}$ ist. Wenn das hier der Fall ist, wird der Betriebsparameter "Linkslauf" (DIR = L) für den Motor 110 von Fig. 1 und 4 in Schritt S1380 bestimmt. Das Verfahren 1300 endet dann in Schritt S1390, in dem die Auswerteeinheit 440 von Fig. 4 den Signalgenerator 450 von Fig. 4 ansteuert, damit dieser seinerseits ein Steuersignal für die zugeordneten Endstufentransistoren des Stators 465 von Fig. 4 erzeugt, um den Motor 110 im Linkslauf zu betreiben. Ansonsten kann das Verfahren z.B. zu Schritt S1320 zurückkehren, um schleifenförmig wiederholt zu werden, bis eine Bestimmung eines geeigneten Betriebsparameters möglich ist.

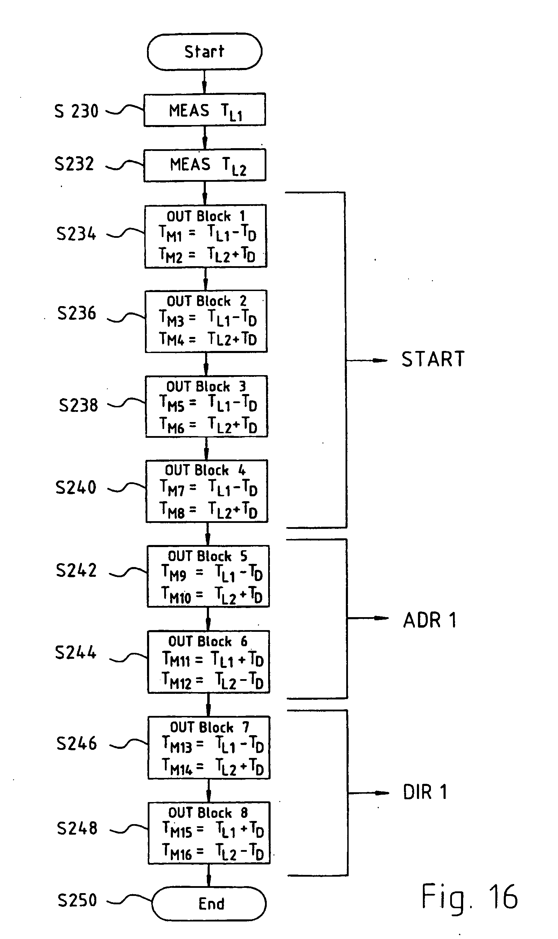

**Fig. 14** zeigt eine Signalfolge, welche dazu dient, auf das PWM-Signal am Eingang 124 der Fig. 1 als erstes ein Startsignal 200, dann ein Adresssignal ADR 202, z.B. für einen der Motoren 530, 540 der Fig. 5, und anschließend ein Drehrichtungssignal DIR 204 für diesen Motor, aufzumodulieren. Dazu werden gemäß Fig. 14b acht Signalblöcke B1 bis B8 erzeugt, wie nachfolgend bei Fig. 16 beschrieben, welche diesen Vorgaben entsprechen.

**Fig. 15** zeigt eine Signalfolge 210, welche dazu dient, die Drehrichtung des Motors 530 (Fig. 5) auf Rechtslauf (DIR1 = R) und die Drehrichtung des Motors 540 auf Linkslauf (DIR2 = L) einzustellen. Auf ein Startsignal 212, welches auf das PWM-Signal 124 (Fig. 1) aufmoduliert ist, folgt ein Adresssignal ADR1 214 für den Motor 530, und dann im Teil 216 ein Drehrichtungssignal DIR1 = R, also Rechtslauf.

Dann folgt ein neues Startsignal 218, das mit den Startsignalen 200 und 212 identisch sein kann, und darauf bei 220 ein Adresssignal ADR 2 für den Motor 540, und für diesen Motor dann bei 222 das Drehrichtungssignal DIR2 = L, also Linkslauf. Das PWM-Signal am Eingang 124 wird laufend gemessen. Der übertragene Wert kann im betreffenden Motor zwischengespeichert werden.

**Fig. 16** zeigt schematisch die Erzeugung der Signalfolge gemäß Fig. 14b. Diese enthält acht Signalblöcke B1 bis B8, die entsprechend dem augenblicklichen Tastverhältnis PWM und den Daten an den Eingängen 126, 128 berechnet worden sind. Dies erfolgt unter Bezugnahme auf die Werte $T_{L1}$ und $T_{L2}$ der Fig. 7, die am Eingang 124 gemessen werden, vgl. in Fig. 16 die Schritte S230, S232. Jeder Block Bn hat eine Impulspause und einen auf diese Pause folgenden Impuls. Anschließend wird in S234 der Block B1 ausgegeben (OUT Block1). Hierbei gilt

$$T_{M1} = T_{L1} - T_D \qquad \qquad ... (1)$$

$$T_{M2} = T_{L2} + T_D \qquad \qquad ... (2)$$

$T_D$ hat die gleiche Bedeutung wie bei Fig. 6, auf die verwiesen wird.

Analog werden in 5236 berechnet:

für Block B2

$$T_{M3} = T_{L1} - T_D \qquad \qquad ... (3)$$

$$T_{M4} = T_{L2} + T_D \qquad \qquad ... (4)$$

Diese beiden Werte werden als Block B2 ausgegeben.

Für Block B3 gilt analog (vgl. Schritt S238)

$$T_{M5} = T_{L1} - T_D \qquad \qquad ... (5)$$

$$T_{M6} = T_{L2} + T_D \qquad \qquad ... (6)$$

Diese beiden Werte werden als Block B3 ausgegeben (OUT Block B3).

Analog werden in den folgenden Schritten S240, 5242, S244, S246 und 5248 die Blöcke B4 bis B8 berechnet und als modulierte PWM-Signale ausgegeben. Das Flussdiagramm der Fig. 16 endet mit Schritt 5250.

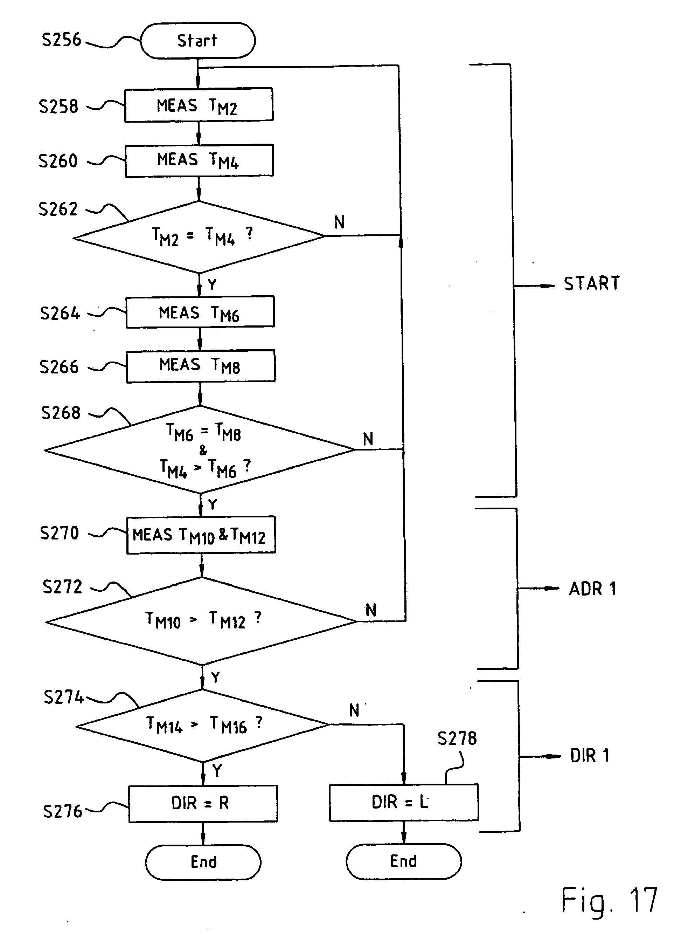

Die Auswertung des Signals der Fig. 14b, z.B. in einem Motor oder einem sonstigen zu steuernden Gerät, ist in **Fig. 17** dargestellt.

Nach dem Start bei 5256 wird bei der Signalfolge der Fig. 14b im Schritt S258 die Zeit $T_{M2}$ und im Schritt S260 die Zeit $T_{M4}$ gemessen, also MEAS $T_{M2}$ und MEAS $T_{M4}$.

Im Schritt 5262 wird geprüft, ob diese Zeiten gleich groß sind. Falls Nein, bedeutet dies, dass kein Startsignal 200 vorliegen kann, und das Programm geht zurück zu 5258. Falls in S262 die Antwort Ja ist, wird anschließend in 5264 die Impulsdauer $T_{M6}$ und in 5266 die Impulsdauer $T_{M8}$ gemessen.

Anschließend wird in 5268 geprüft, ob $T_{M6} = T_{M8}$ ist, und ob $T_{M4}$ größer als $T_{M6}$ ist, also ob ein Startsignal vorliegt. Falls Nein, geht das Programm zurück zu S258. Falls die Antwort Ja ist, liegt ein Startsignal 200 vor, und das Programm geht weiter zum Schritt S270, wo die Impulsdauern $T_{M10}$ und $T_{M12}$ gemessen werden. Hierbei gilt, dass bei einem Adresssignal 202 die Zeitdauer $T_{M10}$ größer sein muss als die Zeitdauer $T_{M12}$. Deshalb wird das in 5272 geprüft, und falls die Antwort Nein lautet, d.h. falls keine Adresse vorliegt, geht das Programm zurück zu 5258.

Falls in S272 die Antwort Ja lautet, werden die Impulsdauern $T_{M14}$ und $T_{M16}$ gemessen, und falls $T_{M14}$ größer ist als $T_{M16}$, was in 5274 geprüft wird, geht das Programm zu 5276, wo der Befehl DIR = R decodiert wird, also Rechtslauf. Falls in 5274 die Antwort Nein lautet, geht das Programm zu S278, wo der Befehl DIR = L decodiert wird, also Linkslauf.

Die Leistung des adressierten Motors wird durch das Tastverhältnis PWM vorgegeben, das gemäß Fig. 7 ausgewertet wird durch das Verhältnis $T_{L2}/(T_{L1} + T_{L2})$, d.h. mit zunehmendem Tastverhältnis steigt die Leistung des Motors (bzw. seine Drehzahl).

Es ist darauf hinzuweisen, dass die verschiedenen Parameter bevorzugt so gewählt werden, dass das Verhältnis wichtiger Impulslängen durch die Modulation hinsichtlich der Funktion des Motors keine Änderung erfährt. Das ist besonders offensichtlich beim Startsignal 200, das in Fig. 14b dargestellt ist. Dort sind die beiden längeren Blöcke B1 und B2 gleich lang, ebenso sind die beiden kürzeren Blöcke B3 und B4 gleich lang, und diese Eigenschaften erfahren durch die Modulation keine Veränderung, so dass auch nach der Modulation das Startsignal leicht und zuverlässig erfasst werden kann. Dasselbe gilt analog für das Adresssignal 202 und das Drehrichtungssignal 204.

Es ist auf diese Weise möglich, die Signalfolgen entweder über separate Signalleitungen zu übertragen, oder auch durch eine entsprechende Ansteuerung der Betriebsspannung, welche z.B. in Fig. 5 den beiden Motoren M1, M2 bzw. den Heizkörpern 550, 560 zugeführt wird.

Die Erfindung betrifft also u.a. eine Vorrichtung, bei welcher eine Anordnung zur Erzeugung eines Adresssignals vorgesehen ist, die zur Adressierung eines Geräts im Zusammenhang mit der Übertragung eines modulierten Steuersignals zu diesem Gerät aktivierbar ist. Bevorzugt ist dabei die Signalerzeugungsvorrichtung dazu ausgebildet, vor der Übertragung eines Adresssignals ein Startsignal START zu übertragen. Letzteres enthält bevorzugt eine Folge von Impulsen, die mindestens paarweise die gleiche Impulsdauer haben, und es weist bevorzugt eine Zahl von Signalelementen, z.B. B1, B2, B3, B4, auf, welche größer ist als 2, z.B. 4.

Naturgemäß sind im Rahmen der augefügten Ansprüche vielfache Abwandlungen und Modifikationen möglich.

**Patentansprüche**

1. Vorrichtung zum Erzeugen eines Signals für die Steuerung eines Elektromotors (110), welche Vorrichtung aufweist:

   A) Einen Signalgenerator (126) zur Erzeugung eines modulierten Steuersignals (PWM_mod) für die Ansteuerung des Elektromotors (110), welcher Signalgenerator (126) dazu ausgebildet ist, durch Aufmodulieren eines Datensignals (DIR; ADR; DATA) mit zum Betrieb des Motors (110) vorgesehenen Daten auf ein PWM-Signal dieses modulierte Steuersignal zu erzeugen, welchem das Tastverhältnis des PWM-Signals (PWM) entnommen werden kann;
   B) eine Sendeeinheit (127) zum Übertragen dieses modulierten Steuersignals (PWM_mod) zum Motor (110);
   C) wobei das modulierte Steuersignal (PWM_mod) - vor seiner Modulation mit dem Datensignal - aufeinanderfolgende Signalelemente (710, 720, 730) aufweist, welche jeweils eine Impulspause (712, 722, 732) mit einer vorgegebenen Pausendauer ($T_{L1}$) und einen darauf folgenden Impuls (714, 724, 734) mit einer vorgegebenen Impulsdauer ($T_{L2}$) aufweisen,
   und die Pausendauer ($T_{L1}$) und die Impulsdauer ($T_{L2}$) in Reiation zu einer dem Motor (110) zuzuführenden elektrischen Leistung stehen.

2. Vorrichtung nach Anspruch 1, bei welcher der Signalgenerator (126) dazu ausgebildet ist, folgende Schritte auszuführen:

   B1) Die Pausendauer ($T_{L1}$) wird bestimmt;
   B2) Die Impulsdauer ($T_{L2}$) wird bestimmt;
   B3) Die Pausendauer ($T_{L1}$) und die Impulsdauer ($T_{L2}$) mindestens zweier Signalelemente (720, 730) werden unter Beibehaltung des vorgegebenen Tastverhältnisses in Abhängigkeit von den Daten des Datensignals (DIR; ADR, DATA) modifiziert.

3. Vorrichtung nach Anspruch 1, bei welcher der Signalgenerator (126) dazu ausgebildet ist, zur Vorgabe einer ersten Drehrichtung folgende Schritte auszuführen:

   B3A) die Pausendauer ($T_{L1}$) mindestens eines ersten ausgewählten Signalelements (720) wird um eine vorgegebene Zeitdauer ($T_D$) verkürzt;
   B3B) die Impulsdauer ($T_{L2}$) des ersten Signalelements (720) wird um die vorgegebene Zeitdauer ($T_D$) verlängert;
   B3C) die Pausendauer ($T_{L1}$) mindestens eines auf das erste ausgewählte Signalelement (720) folgenden zweiten Signalelements (730) wird um die vorgegebene Zeitdauer ($T_D$) verlängert;
   B3D) die Impulsdauer ($T_{L2}$) dieses zweiten Signalelements (730) wird um die vorgegebene Zeitdauer ($T_D$) verkürzt.

4. Vorrichtung nach Anspruch 1, bei welcher der Signalgenerator (126) dazu ausgebildet ist, zur Vorgabe einer zweiten Drehrichtung folgende Schritte auszuführen:

   B3A) die Pausendauer ($T_{L1}$) mindestens eines ersten ausgewählten Signalelements (720) wird um eine vorgegebene Zeitdauer ($T_D$) verlängert;
   B3B) die Impulsdauer ($T_{L2}$) des ersten Signalelements (720) wird um die vorgegebene Zeitdauer ($T_D$) verkürzt;
   B3C) die Pausendauer ($T_{L1}$) mindestens eines auf das erste ausgewählte Signalelement (720) unmittelbar folgenden zweiten Signalelements (730) wird um die vorgegebene Zeitdauer ($T_D$) verkürzt;
   B3D) die Impulsdauer ($T_{L2}$) des zweiten Signalelements (730) wird um die vorgegebene Zeitdauer ($T_D$) verlängert.

5. Vorrichtung nach einem der vorhergehenden Ansprüche, welche dazu ausgebildet ist, das PWM-Signal auf die Versorgungsspannung ($U_b$) für den Elektromotor (110) aufzumodulieren.

6. Elektromotor mit einem Stator (465), einem Rotor (470), und mit einer Vorrichtung zur Auswertung eines zur Ansteuerung dieses Motors (110) zuführbaren Steuersignals (PWM_mod), welche Vorrichtung aufweist:

   A) Eine Empfangseinheit (430, 440) zum Empfangen des Steuersignals (PWM_mod), welches gebildet ist durch Modulation eines pulsweitenmodulierten Signals (PWM) mit einem Datensignal (DIR; DATA) mit zum Betrieb des Motors (110) vorgesehenen Daten, wobei dem modulierten Steuersignal (PWM_mod) ein vorgegebenes Tastverhältnis entnehmbar ist;
   B) eine Auswerteeinheit (440) zur Auswertung des modulierten Steuersignals (PWM_mod), welche dazu ausgebildet ist, die zum Betrieb des Motors (110) vorgesehenen Daten auf der Basis des modulierten Steuersignals (PWM_mod) zu ermitteln;
   C) eine Anordnung (450), welche dazu ausgebildet ist, auf der Basis dieser ermittelten Daten mindestens ein Ansteuersignal für den Motor (110) zu erzeugen;
   D) wobei die Vorrichtung zur Auswertung des Steuersignals (PWM_mod) dazu ausgebildet ist, diesem Steuersignal ein Tastverhältnis zu entnehmen, das zur Leistungssteuerung des Motors (110) geeignet ist.

7. Elektromotor nach Anspruch 6, bei welchem die Auswerteeinheit (440) dazu ausgebildet ist, bei der Auswertung des modulierten Steuersignals (PWM_mod) folgende Schritte auszuführen:

   B1) Die Impulsdauer ($T_{M2}$) eines Referenz-Signalelements (810; 910) wird bestimmt;
   B2) die Impulsdauer ($T_{M4}$) eines ersten darauf folgenden Signalelements (820; 920) wird bestimmt;
   B3) die Impulsdauer ($T_{M6}$) eines zweiten Signalelements (830; 930) wird bestimmt;
   B4) falls die Impulsdauer ($T_{M2}$) des Referenz-Signalelements (810; 910) größer ist als die Impulsdauer ($T_{M4}$) des ersten Signalelements (820; 920) und kleiner als die Impulsdauer ($T_{M6}$) des zweiten Signalelements (830; 930), wird der Motor (110) in die erste Drehrichtung gesteuert;
   B5) falls die Impulsdauer ($T_{M2}$) des Referenz-Signalelements (810; 910) größer ist als die Impulsdauer ($T_{M4}$) des zweiten Signalelements (830; 930) und kleiner als die Impulsdauer ($T_{M6}$) des ersten Signalelements (820; 920), wird der Motor (110) in die zweite Drehrichtung gesteuert.

8. Verfahren zur Erzeugung eines Signals zur Steuerung eines elektrischen Verbrauchers, welches Verfahren folgende Schritte aufweist:

   A) Ein pulsweitenmoduliertes Signal (PWM) mit einem vorgegebenen Tastverhältnis wird erzeugt;
   B) Auf dieses pulsweitenmodulierte Signal (PWM) wird ein Datensignal (DIR; DATA) mit zum Betrieb des Verbrauchers vorgesehenen Daten aufmoduliert, um ein moduliertes Steuersignal (PWM_mod) zu erzeugen, welchem das vorgegebene Tastverhältnis des pulsweitenmodulierten Signals (PWM) entnehmbar ist;
   C) wobei das pulsweitenmodulierte Signal (PWM) aufeinander folgende Signalelemente (Block 1, Block 2, Block 3) aufweist, welche jeweils eine Impulspause mit einer vorgegebenen Pausendauer ($T_{L1}$) und einen darauf folgenden Impuls mit einer vorgegebenen Impulsdauer ($T_{L2}$) aufweisen, wobei die Pausendauer ($T_{L1}$) und die Impulsdauer ($T_{L2}$) in Abhängigkeit von der dem Verbraucher zuzuführenden Leistung vorgegeben werden.

9. Verfahren nach Anspruch 8, welches folgende weiteren Schritte aufweist:

   B1) die Pausendauer ($T_{L1}$) wird bestimmt;
   B2) die Impulsdauer ($T_{L2}$) wird bestimmt;
   B3) die Pausendauer ($T_{L1}$) und die Impulsdauer ($T_{L2}$) mindestens zweier Signalelemente (Block 1, Block 2, Block 3) werden unter Beibehaltung des vorgegebenen Tastverhältnisses in Abhängigkeit von den Daten des Datensignals (DIR) modifiziert.

10. Verfahren nach Anspruch 9, bei welchem das Datensignal (DIR, DATA) einen Betriebsparameter des Verbrauchers vorgibt.

11. Verfahren nach Anspruch 9 oder 10, bei welchem Schritt B3) zur Vorgabe eines ersten Betriebsparameters folgende Schritte aufweist:

   B3A) die Pausendauer ($T_{L1}$) mindestens eines ersten ausgewählten Signalelements (Block 2) wird um eine vorgegebene Zeitdauer ($T_D$) verkürzt;
   B3B) die Impulsdauer ($T_{L2}$) des ersten Signalelements (Block 2) wird um die vorgegebene Zeitdauer ($T_D$) verlängert;

B3C) die Pausendauer ($T_{L1}$) mindestens eines auf das erste ausgewählte Signalelement (Block 2) unmittelbar folgenden zweiten Signalelements (Block 3) wird um die vorgegebene Zeitdauer ($T_D$) verlängert;

B3D) die Impulsdauer ($T_{L2}$) des zweiten Signalelements (Block 3) wird um die vorgegebene Zeitdauer ($T_D$) verkürzt.

12. Verfahren nach Anspruch 10 oder 11, bei welchem Schritt B3) zur Vorgabe eines zweiten Betriebsparameters folgende Schritte aufweist:

B3A) die Pausendauer ($T_{L1}$) mindestens eines ersten ausgewählten Signalelements (Block 2) wird um eine vorgegebene Zeitdauer ($T_D$) verlängert;

B3B) die Impulsdauer ($T_{L2}$) des ersten Signalelements (Block 2) wird um die vorgegebene Zeitdauer ($T_D$) verkürzt;

B3C) die Pausendauer ($T_{L1}$) mindestens eines auf das erste ausgewählte Signalelement (Block 2) unmittelbar folgenden zweiten Signalelements (Block 3) wird um die vorgegebene Zeitdauer (To) verkürzt;

B3D) die Impulsdauer ($T_{L2}$) des zweiten Signalelements (Block 3) wird um die vorgegebene Zeitdauer ($T_D$) verlängert.

13. Vorrichtung zur Auswertung eines zur Ansteuerung eines Elektromotors (110) zuführbaren Steuersignals (PWM_mod), welche Vorrichtung aufweist:

A) Eine Empfangseinheit (430, 440) zum Empfangen des Steuersignals (PWM_mod), welches gebildet ist durch Modulation eines pulsweitenmodulierten Signals (PWM) mit einem Datensignal (DIR; DATA) mit zum Betrieb des Motors (110) vorgesehenen Daten, wobei dem modulierten Steuersignal (PWM_mod) ein vorgegebenes Tastverhältnis entnehmbar ist;

B) eine Auswerteeinheit (440) zur Auswertung des modulierten Steuersignals (PWM_mod), welche dazu ausgebildet ist, die zum Betrieb des Motors (110) vorgesehenen Daten auf der Basis des modulierten Steuersignals (PWM_mod) zu ermitteln;

C) eine Anordnung (450), welche dazu ausgebildet ist, auf der Basis dieser ermittelten Daten mindestens ein Ansteuersignal für den Motor (110) zu erzeugen;

D) wobei die Vorrichtung zur Auswertung des Steuersignals (PWM_mod) dazu ausgebildet ist, diesem Steuersignal ein Tastverhältnis zu entnehmen, das zur Leistungssteuerung des Motors (110) geeignet ist.

**Claims**

1. Device for generating a signal for the control of an electric motor (110), which device has:

A) a signal generator (126) for generating a modulated control signal (PWM_mod) for activating the electric motor (110), which signal generator (126) is formed to generate, by modulation of a data signal (DIR; ADR; DATA) with data provided for the operation of the motor (110) onto a PWM signal, this modulated control signal, from which the duty cycle of the PWM signal (PWM) can be taken;

B) a transmitter unit (127) for transmitting this modulated control signal (PWM_mod) to the motor (110) ;

C) wherein the modulated control signal (PWM_mod) - prior to its modulation with the data signal - has consecutive signal elements (710, 720, 730), which each have an interpulse period (712, 722, 732) with a predetermined period duration ($T_{L1}$) and a following pulse (714, 724, 734) with a predetermined pulse duration ($T_{L2}$), and the period duration ($T_{L1}$) and the pulse duration ($T_{L2}$) are in relation to an electrical output to be supplied to the motor (110).

2. Device according to claim 1, in which the signal generator (126) is formed to execute the following steps:

B1) the period duration ($T_{L1}$) is determined;

B2) the pulse duration ($T_{L2}$) is determined;

B3) the period duration ($T_{L1}$) and the pulse duration ($T_{L2}$) of at least two signal elements (720, 730) are modified while retaining the predetermined duty cycle as a function of the data of the data signal (DIR; ADR; DATA).

3. Device according to claim 1, in which the signal generator (126) is formed to execute the following steps to specify a first direction of rotation:

B3A) the period duration ($T_{L1}$) of at least a first selected signal element (720) is shortened by a predetermined time duration ($T_D$) ;

B3B) the pulse duration ($T_{L2}$) of the first signal element (720) is extended by the predetermined time duration ($T_D$) ;

B3C) the period duration ($T_{L1}$) of at least one second signal element (730) following the first selected signal element (720) is extended by the predetermined time duration ($T_D$) ;

B3D) the pulse duration ($T_{L2}$) of this second signal element (730) is shortened by the predetermined time duration ($T_D$).

4. Device according to claim 1, in which the signal generator (126) is formed to execute the following steps to specify a second direction of rotation:

B3A) the period duration ($T_{L1}$) of at least a first selected signal element (720) is extended by a predetermined time duration ($T_D$) ;

B3B) the pulse duration ($T_{L2}$) of the first signal element (720) is shortened by the predetermined time duration ($T_D$) ;

B3C) the period duration ($T_{L1}$) of at least one second signal element (730) directly following the first selected signal element (720) is shortened by the predetermined time duration ($T_D$) ;

B3D) the pulse duration ($T_{L2}$) of the second signal element (730) is extended by the predetermined time duration ($T_D$).

5. Device according to one of the preceding claims, which is formed to modulate the PWM signal onto the supply voltage (Ub) for the electric motor (110).

6. Electric motor with a stator (465), a rotor (470), and with a device for evaluating a control signal (PWM_mod) that can be supplied to activate this motor (110), which device has:

A) a receiver unit (430, 440) for receiving the control signal (PWM_mod), which is formed by modulation of a pulse-width-modulated signal (PWM) with a data signal (DIR; DATA) with data provided for the operation of the motor (110), wherein a predetermined duty cycle can be taken from the modulated control signal (PWM_mod) ;

B) an evaluation unit (440) for evaluating the modulated control signal (PWM_mod), which evaluation unit is formed to identify the data provided for the operation of the motor (110) on the basis of the modulated control signal (PWM_mod) ;

C) an arrangement (450), which is formed to generate at least one activation signal for the motor (110) on the basis of these identified data;

D) wherein the device for evaluating the control signal (PWM_mod) is formed to take a duty cycle from this control signal, which cycle is suitable for power control of the motor (110).

7. Electric motor according to claim 6, in which the evaluation unit (440) is formed to execute the following steps in the evaluation of the modulated control signal (PWM_mod) :

B1) the pulse duration ($T_{M2}$) of a reference signal element (810; 910) is determined;

B2) the pulse duration ($T_{M4}$) of a first signal element (820; 920) following this is determined;

B3) the pulse duration ($T_{M6}$) of a second signal element (830; 930) is determined;

B4) if the pulse duration ($T_{M2}$) of the reference signal element (810; 910) is greater than the pulse duration ($T_{M4}$) of the first signal element (820; 920) and smaller than the pulse duration ($T_{M6}$) of the second signal element (830; 930), the motor (110) is controlled in the first direction of rotation;

B5) if the pulse duration ($T_{M2}$) of the reference signal element (810; 910) is greater than the pulse duration ($T_{M4}$) of the second signal element (830; 930) and smaller than the pulse duration ($T_{M6}$) of the first signal element (820; 920), the motor (110) is controlled in the second direction of rotation.

8. Method for generating a signal for controlling an electrical consumer, which method has the following steps:

A) a pulse-width-modulated signal (PWM) with a predetermined duty cycle is generated;

B) a data signal (DIR; DATA) with data provided for the operation of the consumer is modulated onto this pulse-width-modulated signal (PWM), in order to generate a modulated control signal (PWM_mod), from which the predetermined duty cycle of the pulse-width-modulated signal (PWM) can be taken;

C) wherein the pulse-width-modulated signal (PWM) has consecutive signal elements (block 1, block 2, block 3), which each have an interpulse period with a predetermined period duration ($T_{L1}$) and a following pulse with a predetermined pulse duration ($T_{L2}$), wherein the period duration ($T_{L1}$) and the pulse duration ($T_{L2}$) are specified as a function of the power to be supplied to the consumer.

9. Method according to claim 8, which has the following steps:

B1) the period duration ($T_{L1}$) is determined;
B2) the pulse duration ($T_{L2}$) is determined;
B3) the period duration ($T_{L1}$) and the pulse duration ($T_{L2}$) of at least two signal elements (block 1, block 2, block 3) are modified while retaining the predetermined duty cycle as a function of the data of the data signal (DIR).

10. Method according to claim 9, in which the data signal (DIR, DATA) specifies an operating parameter of the consumer.

11. Method according to claim 9 or 10, in which step B3) for specifying a first operating parameter has the following steps:

B3A) the period duration ($T_{L1}$) of at least a first selected signal element (block 2) is shortened by a predetermined time duration ($T_D$) ;
B3B) the pulse duration ($T_{L2}$) of the first signal element (block 2) is extended by the predetermined time duration ($T_D$) ;
B3C) the period duration ($T_{L1}$) of at least one second signal element (block 3) directly following the first selected signal element (block 2) is extended by the predetermined time duration ($T_D$) ;
B3D) the pulse duration ($T_{L2}$) of the second signal element (block 3) is shortened by the predetermined time duration ($T_D$).

12. Method according to claim 10 or 11, in which step B3) for specifying a second operating parameter has the following steps:

B3A) the period duration ($T_{L1}$) of at least a first selected signal element (block 2) is extended by a predetermined time duration ($T_D$) ;
B3B) the pulse duration ($T_{L2}$) of the first signal element (block 2) is shortened by the predetermined time duration ($T_D$) ;
B3C) the period duration ($T_{L1}$) of at least one second signal element (block 3) directly following the first selected signal element (block 2) is shortened by the predetermined time duration ($T_D$) ;
B3D) the pulse duration ($T_{L2}$) of the second signal element (block 3) is extended by the predetermined time duration ($T_D$).

13. Device for evaluating a control signal (PWM_mod) that can be supplied for the activation of an electric motor (110), which device has:

A) a receiver unit (430, 440) for receiving the control signal (PWM_mod), which is formed by modulation of a pulse-width-modulated signal (PWM) with a data signal (DIR; DATA) with data provided for the operation of the motor (110), wherein a predetermined duty cycle can be taken from the modulated control signal (PWM_mod) ;
B) an evaluation unit (440) for evaluating the modulated control signal (PWM_mod), which evaluation unit is formed to identify the data provided for the operation of the motor (110) on the basis of the modulated control signal (PWM_mod) ;
C) an arrangement (450), which is formed to generate at least one activation signal for the motor (110) on the basis of these identified data;
D) wherein the device for evaluating the control signal (PWM_mod) is formed to take a duty cycle from this control signal, which cycle is suitable for power control of the motor (110).

**Revendications**

1. Dispositif de génération d'un signal destiné à la commande d'un moteur électrique (110), lequel dispositif présente :

A) un générateur de signal (126) pour générer un signal de commande modulé (PWM_mod) pour la commande du moteur électrique (110), lequel générateur de signal (126) est conçu pour générer ce signal de commande modulé par modulation d'un signal de données (DIR ; ADR ; DATA) avec des données prévues pour le fonctionnement du moteur (110) sur un signal PWM, duquel signal de commande modulé le rapport cyclique du signal PWM (PWM) peut être prélevé ;

B) une unité d'émission (127) pour transmettre ce signal de commande modulé (PWM_mod) au moteur (110) ;

C) le signal de commande modulé (PWM_mod) présentant, avant sa modulation par le signal de données, des éléments de signal successifs (710, 720, 730), lesquels présentent chacun une pause d'impulsion (712, 722, 732) ayant une durée de pause ($T_{L1}$) prescrite et une impulsion suivante (714, 724, 734) ayant une durée d'impulsion ($T_{L2}$) prescrite,

et la durée de pause ($T_{L1}$) et la durée d'impulsion ($T_{L2}$) étant en relation avec une puissance électrique à fournir au moteur (110).

2. Dispositif selon la revendication 1, dans lequel le générateur de signal (126) est conçu pour exécuter les étapes suivantes :

B1) la durée de pause ($T_{L1}$) est déterminée ;

B2) la durée d'impulsion ($T_{L2}$) est déterminée ;

B3) la durée de pause ($T_{L1}$) et la durée d'impulsion ($T_{L2}$) d'au moins deux éléments de signal (720, 730) sont modifiées en fonction des données du signal de données (DIR ; ADR, DATA), en maintenant le rapport cyclique prescrit.

3. Dispositif selon la revendication 1, dans lequel le générateur de signal (126) est conçu pour exécuter les étapes suivantes afin de prescrire un premier sens de rotation :

B3A) la durée de pause ($T_{L1}$) d'au moins un premier élément de signal sélectionné (720) est raccourcie d'une durée prescrite ($T_D$) ;

B3B) la durée d'impulsion ($T_{L2}$) du premier élément de signal (720) est prolongée de la durée prescrite ($T_D$) ;

B3C) la durée de pause ($T_{L1}$) d'au moins un deuxième élément de signal (730) suivant le premier élément de signal sélectionné (720) est prolongée de la durée prescrite ($T_D$) ;

B3D) la durée d'impulsion ($T_{L2}$) de ce deuxième élément de signal (730) est raccourcie de la durée prescrite ($T_D$).

4. Dispositif selon la revendication 1, dans lequel le générateur de signal (126) est conçu pour exécuter les étapes suivantes afin de prescrire un deuxième sens de rotation :

B3A) la durée de pause ($T_{L1}$) d'au moins un premier élément de signal sélectionné (720) est prolongé d'une durée prescrite ($T_D$) ;

B3B) la durée d'impulsion ($T_{L2}$) du premier élément de signal (720) est raccourcie de la durée prescrite ($T_D$) ;

B3C) la durée de pause ($T_{L1}$) d'au moins un deuxième élément de signal (730) suivant immédiatement le premier élément de signal sélectionné (720) est raccourcie de la durée prescrite ($T_D$) ;

B3D) la durée d'impulsion ($T_{L2}$) du deuxième élément de signal (730) est prolongée de la durée prescrite ($T_D$).

5. Dispositif selon une des revendications précédentes, lequel est conçu pour moduler le signal PWM sur la tension d'alimentation (Ub) du moteur électrique (110).

6. Moteur électrique avec un stator (465), un rotor (470) et un dispositif pour évaluer un signal de commande (PWM_mod) pouvant être amené pour commander ce moteur (110), lequel dispositif présente :

A) une unité de réception (430, 440) pour recevoir le signal de commande (PWM_mod), lequel est formé par modulation d'un signal modulé en largeur d'impulsion (PWM) avec un signal de données (DIR ; DATA) contenant des données prévues pour le fonctionnement du moteur (110), un rapport cyclique prescrit pouvant être prélevé du signal de commande modulé (PWM_mod) ;

B) une unité d'évaluation (440) pour évaluer le signal de commande modulé (PWM_mod), laquelle est conçue pour déterminer les données prévues pour le fonctionnement du moteur (110) sur la base du signal de commande modulé (PWM_mod) ;

C) un arrangement (450), lequel est conçu pour générer, sur la base de ces données déterminées, au moins un signal de commande pour le moteur (110) ;

D) le dispositif d'évaluation du signal de commande (PWM_mod) étant conçu pour prélever de ce signal de commande un rapport cyclique adapté à la commande de puissance du moteur (110).

7. Moteur électrique selon la revendication 6, dans lequel l'unité d'évaluation (440) est conçue pour exécuter les étapes suivantes lors de l'évaluation du signal de commande modulé (PWM_mod) :

B1) la durée d'impulsion ($T_{M2}$) d'un élément de signal de référence (810 ; 910) est déterminée ;

B2) la durée d'impulsion ($T_{M4}$) d'un premier élément de signal suivant (820 ; 920) est déterminée ;

B3) la durée d'impulsion ($T_{M6}$) d'un deuxième élément de signal (830 ; 930) est déterminée ;

B4) si la durée d'impulsion ($T_{M2}$) de l'élément de signal de référence (810 ; 910) est supérieure à la durée d'impulsion ($T_{M4}$) du premier élément de signal (820 ; 920) et inférieure à la durée d'impulsion ($T_{M6}$) du deuxième élément de signal (830 ; 930), le moteur (110) est commandé dans le premier sens de rotation ;

B5) si la durée d'impulsion ($T_{M2}$) de l'élément de signal de référence (810 ; 910) est supérieure à la durée d'impulsion ($T_{M4}$) du deuxième élément de signal (830 ; 930) et inférieure à la durée d'impulsion ($T_{M6}$) du premier élément de signal (820 ; 920), le moteur (110) est commandé dans le deuxième sens de rotation.

8. Procédé de génération d'un signal destiné à la commande d'un consommateur électrique, lequel procédé présente les étapes suivantes :

A) un signal modulé en largeur d'impulsion (PWM) avec un rapport cyclique prescrit est généré ;

B) un signal de données (DIR ; DATA) contenant des données prévues pour le fonctionnement du consommateur est modulé sur ce signal modulé en largeur d'impulsion (PWM) pour générer un signal de commande modulé (PWM_mod) dont le rapport cyclique prescrit du signal modulé en largeur d'impulsion (PWM) peut être prélevé ;

C) le signal modulé en largeur d'impulsion (PWM) présentant des éléments de signal successifs (Block 1, Block 2, Block 3) qui présentent chacun une pause d'impulsion ayant une durée de pause prescrite ($T_{L1}$) et une impulsion suivante ayant une durée d'impulsion prescrite ($T_{L2}$), la durée de pause ($T_{L1}$) et la durée d'impulsion ($T_{L2}$) étant prescrites en fonction de la puissance à fournir au consommateur.

9. Procédé selon la revendication 8, lequel présente les autres étapes suivantes :

B1) la durée de pause ($T_{L1}$) est déterminée ;

B2) la durée d'impulsion ($T_{L2}$) est déterminée ;

B3) la durée de pause ($T_{L1}$) et la durée d'impulsion ($T_{L2}$) d'au moins deux éléments de signal (Block 1, Block 2, Block 3) sont modifiées en fonction des données du signal de données (DIR), en maintenant le rapport cyclique prescrit.

10. Procédé selon la revendication 9, dans lequel le signal de données (DIR, DATA) prescrit un paramètre de fonctionnement du consommateur.

11. Procédé selon la revendication 9 ou 10, dans lequel l'étape B3) de prescription d'un premier paramètre de fonctionnement présente les étapes suivantes :

B3A) la durée de pause ($T_{L1}$) d'au moins un premier élément de signal sélectionné (Block 2) est raccourcie d'une durée prescrite ($T_D$) ;

B3B) la durée d'impulsion ($T_{L2}$) du premier élément de signal (Block 2) est prolongée de la durée prescrite ($T_D$) ;

B3C) la durée de pause ($T_{L1}$) d'au moins un deuxième élément de signal (Block 3) suivant immédiatement le premier élément de signal sélectionné (Block 2) est prolongée de la durée prescrite ($T_D$) ;

B3D) la durée d'impulsion ($T_{L2}$) du deuxième élément de signal (Block 3) est raccourcie de la durée prescrite ($T_D$).

12. Procédé selon la revendication 10 ou 11, dans lequel l'étape B3) de prescription d'un deuxième paramètre de fonctionnement présente les étapes suivantes :

B3A) la durée de pause ($T_{L1}$) d'au moins un premier élément de signal sélectionné (Block 2) est prolongée d'une durée prescrite ($T_D$) ;

B3B) la durée d'impulsion ($T_{L2}$) du premier élément de signal (Block 2) est raccourcie de la durée prescrite ($T_D$) ;

B3C) la durée de pause ($T_{L1}$) d'au moins un deuxième élément de signal (Block 3) suivant immédiatement le premier élément de signal sélectionné (Block 2) est raccourcie de la durée prescrite ($T_D$) ;

B3D) la durée d'impulsion ($T_{L2}$) du deuxième élément de signal (Block 3) est prolongée de la durée prescrite ($T_D$).

13. Dispositif d'évaluation d'un signal de commande (PWM_mod) pouvant être amené pour commander un moteur électrique (110), lequel dispositif présente :

A) une unité de réception (430, 440) pour recevoir le signal de commande (PWM_mod), lequel est formé par modulation d'un signal modulé en largeur d'impulsion (PWM) avec un signal de données (DIR ; DATA) contenant des données prévues pour le fonctionnement du moteur (110), un rapport cyclique prescrit pouvant être prélevé du signal de commande modulé (PWM_mod) ;

B) une unité d'évaluation (440) pour évaluer le signal de commande modulé (PWM_mod), laquelle est conçue pour déterminer les données prévues pour le fonctionnement du moteur (110) sur la base du signal de commande modulé (PWM_mod) ;

C) un arrangement (450), lequel est conçu pour générer, sur la base de ces données déterminées, au moins un signal de commande pour le moteur (110) ;

D) le dispositif d'évaluation du signal de commande (PWM_mod) étant conçu pour prélever de ce signal de commande un rapport cyclique adapté à la commande de puissance du moteur (110).

Fig. 1

Fig. 2

Fig. 3

Fig. 4

Fig. 5

Fig. 6

Fig. 7

Fig. 8

Fig. 9

Fig.10

1000

$U_b(t)$

$U_b$

1010
SEQ L

1020
SEQ L

1030
SEQ L

t

Fig.11

1100

$U_b(t)$

$U_b$

1110
SEQ L

1120
SEQ PWM

1130
SEQ PWM

t

Fig.12

1200

$U_B(t)$

$U_b$

1210
SEQ L

1220
SEQ PWM

1230
SEQ L

1240
$T_p$

t

1300

Start — S1310

MEAS T$_{M2}$ — S1320

MEAS T$_{M4}$ — S1330

MEAS T$_{M6}$ — S1340

T$_{M4}$ < TM2 & T$_{M6}$ > TM2 ? — S1352

N

Y

S1360 — DIR = R

S1370 — End

T$_{M6}$ < TM2 & T$_{M4}$ > TM2 ? — S1354

N

Y

S1380 — DIR = L

S1390 — End

Fig. 13

22

Fig. 14

Fig. 15

$$\text{Start}$$

S 230 — MEAS $T_{L1}$

S232 — MEAS $T_{L2}$

S234 — OUT Block 1
$T_{M1} = T_{L1} - T_D$
$T_{M2} = T_{L2} + T_D$

S236 — OUT Block 2
$T_{M3} = T_{L1} - T_D$
$T_{M4} = T_{L2} + T_D$

S238 — OUT Block 3
$T_{M5} = T_{L1} - T_D$
$T_{M6} = T_{L2} + T_D$

S240 — OUT Block 4
$T_{M7} = T_{L1} - T_D$
$T_{M8} = T_{L2} + T_D$

} → START

S242 — OUT Block 5
$T_{M9} = T_{L1} - T_D$
$T_{M10} = T_{L2} + T_D$

S244 — OUT Block 6
$T_{M11} = T_{L1} + T_D$
$T_{M12} = T_{L2} - T_D$

} → ADR 1

S246 — OUT Block 7
$T_{M13} = T_{L1} - T_D$
$T_{M14} = T_{L2} + T_D$

S248 — OUT Block 8
$T_{M15} = T_{L1} + T_D$
$T_{M16} = T_{L2} - T_D$

} → DIR 1

S250 — End

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1413045 B1

- DE 4029556 A1